# EUROPEAN PATENT SPECIFICATION

(11) **EP 2 157 494 B1**
(45) Date of publication and mention of the grant of the patent: **10.01.2018**
(21) Application number: 09168054.6
(22) Date of filing: 18.08.2009
(51) Int. Cl.: G06F 1/16, G06F 21/32

(54) **Information processing unit**
Informationsverarbeitungseinheit
Unité de traitement des informations

(30) Priority: 19.08.2008 JP 2008211003
(43) Date of publication of application: 24.02.2010
(73) Proprietor: Panasonic Corporation, Kadoma-shi Osaka 571-8501 (JP)
(72) Inventor: Nagamura, Yoshiaki, Osaka-shi, Osaka 540-6207 (JP); Nakatani, Hitoshi, Osaka-shi, Osaka 540-6207 (JP); Tanaka, Shintaro, Osaka-shi, Osaka 540-6207 (JP); Kaneko, Haruka, Osaka-shi, Osaka 540-6207 (JP); Murakata, Masato, Osaka-shi, Osaka 540-6207 (JP)
(74) Representative: Eisenführ Speiser

(56) References cited:
- EP-A- 1 850 205
- WO-A-00/29931
- WO-A1-2007/140806
- GB-A- 2 316 466
- US-A- 5 382 962
- US-A1- 2006 078 175

## Description

The present invention relates to an information processing unit equipped with a biometric authentication function capable of reading characteristics of a human body. US2006/0078175 discloses a vehicle diagnostic display unit including a case, a display screen disposed within a front portion of the case, and a main support coupled to a side of the case and having a finger compartment for receiving user's fingers to allow the user to lift the vehicle diagnostic display unit using one hand. A navigation pad is disposed on a front surface of the main support and the main support is configured to allow a user to simultaneously lift the diagnostic display unit and access the navigation pad so that the user's thumb naturally rests on the fingerprint scanner when the user lifts the diagnostic display unit and accesses the navigation pad with the thumb.

WO00/29931 discloses a portable computer having a clamshell configuration with a base and a screen. The screen fits into a recess in the base when closed. The rear of the base fits into a docking station with the computer in an upright position. A carrying handle allows the computer to be easily inserted in the docking station, and to be carried around by a student. A power management circuit maintains power supply to a CPU and a memory when the computer is switched off. This allows instant start-up subject to power supply validation.

EP1850205 discloses a computer comprising a biometric device communicatively coupled to operational electronics of the computer and the biometric device being physically coupled to a housing of the computer in a non-removable fashion, the biometric device having an operative surface for receiving biometric input. The computer further comprising a mechanism associated with the biometric device and configured to control movement of the operative surface between extended and retracted positions, wherein the extended position is characterized such that the operative surface is exposed for use and the retracted position is characterized such that the operative surface is not exposed for use. In accordance with the improvement in the portability of portable information processing units such as laptop computers, more products have been equipped with fingerprint sensors able to conduct fingerprint authentication as a security function. Taking the operability into consideration, such a fingerprint sensor is arranged typically in the vicinity of a keyboard operation part or in the vicinity of a pointing device (palm rest) (see JP2001-125662 A, JP2001-274897 A and JP2006-301786 A),

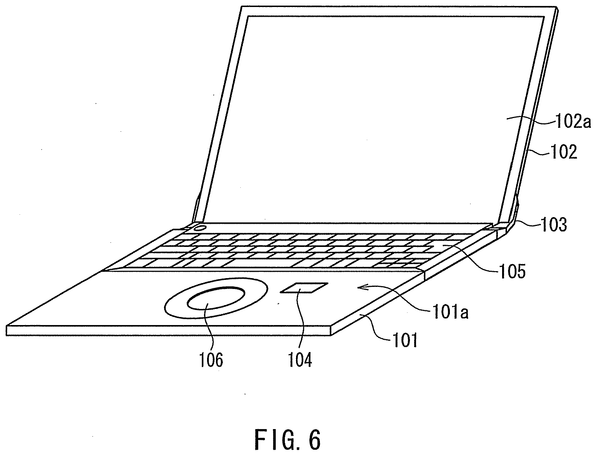

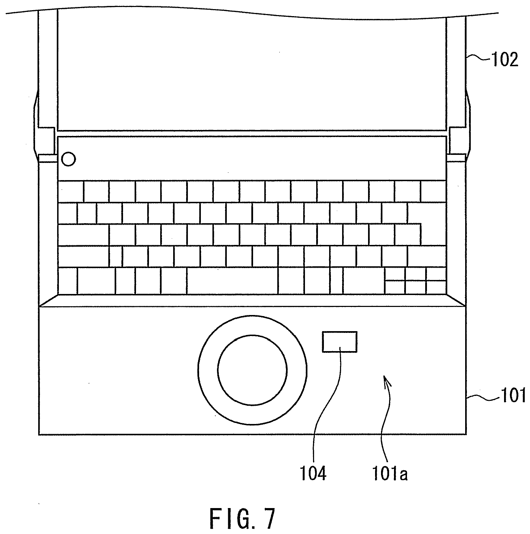

FIG. 6 is a perspective view showing an appearance of a conventional information processing unit, FIG. 7 is a plan view showing a first case 101 of the information processing unit shown in FIG. 6. The conventional information processing unit includes the first case 101 and a second case 102. The first case 101 includes a keyboard 105, a pointing device 106 and the like. The second case 102 includes a liquid crystal display 102a. The first case 101 and the second case 102 are supported rotatably to each other by a hinge part 103. A fingerprint sensor 104 is disposed on the upper surface of the first case 101, other than the areas for the keyboard 105 and the pointing device 106. In the information processing unit as shown in FIGs. 6 and 7, the fingerprint sensor 104 is disposed on a palm rest 101a on the upper surface of the first case 101.

However, if the fingerprint sensor is disposed on the palm rest 101a of the laptop computer, during an operation of the keyboard 105 and the pointing device 106 by the user, the finger or the hand of the mer comes into accidental contact with the fingerprint sensor, and it will cause operation errors. Further, since the finger or the hand of the 1,W:t' comes into accidental contact with the fingerprint sensor during the operation of the keyboard 105 and the pointing device 106, the user will feel some discomfort. Since the finger and the hand of the user comes into accidental contact with the fingerprint sensor with a high frequency, the fingerprint sensor will be stained soon with fingerprints, resulting in some problems such as sensitivity degradation.

Therefore, with the foregoing in mind it is an object of the present invention to provide an information processing unit having a fingerprint sensor positioned to reduce the possibility that a finger, a hand and the like of a user come into accidental contact with the fingerprint sensor, thereby preventing operation errors and sensitivity degradation of the fingerprint sensor and also preventing discomfort for the user during an operation of a keybord and the like.
The information processing unit of the present invention is defined in claim 1.
According to an exemplary embodiment, it is possible to isolate a part for an input operation and a part for an authentication function. Thereby, operation errors can be prevented and discomfort during an operation can be reduced.
FIG. 1 is a perspective view showing an appearance of an information processing unit according to Embodiment 1.
FIG. 2 is a plan view showing a first case of an information professing unit according to an exemplary embodiment.
FIG. 3 is a perspective view showing an appearance of an information processing unit according to an exemplary embodiment.
FIG. 4 is a side view showing an information processing unit according to an exemplary embodiment.
FIG. 5 is a perspective view showing an information processing unit according to an exemplary embodiment.
FIG. 6 is a perspective view showing an appearance of a conventional information processing unit.
FIG. 7 is a plan view showing a first case of a conventional information processing unit.

An information processing unit of the present invention includes: the features as defined in claim 1.

Based on the above-described configuration, the information processing unit of the present invention can be configured as described below.

The information processing unit of the present invention is configured so that the case comprises a first case on which the operation partis disposed and a second case on which the display part is disposed. The first case and the second case are pivoted to open and close by rotation about a shaft; and the supporting part is disposed on a side face of the first case. According to this configuration, since the first case that is heavier than the second case can be gripped at the grip part, load applied to the shaft can be reduced when the user carries the information processing unit by gripping the grip part, for example.

The information processing unit of the present invention can be configured so that the biometric authentication part is a fingerprint sensor capable of reading a fingerprint of a human body.

The information processing unit of the present invention is configured so that the case comprises a first case on which the operation part is disposed and a second case on which the display part is disposed. The first case and the second case are pivoted to open and close by rotation about a shaft; and the supporting part is disposed on a side face of the first case. And, the biometric authentication part is a fingerprint sensor capable of reading a fingerprint of a human body.

The information processing unit of the present invention is configured so that the case and the supporting part are separate members independent from each other. According to the configuration, when a failure occurs at the biometric authentication part disposed on the supporting part for example, itispossible to detach the supporting part alone and replace components of the biometric authentication part in a simple manner. As a result, the ability to make repairs can be improved.

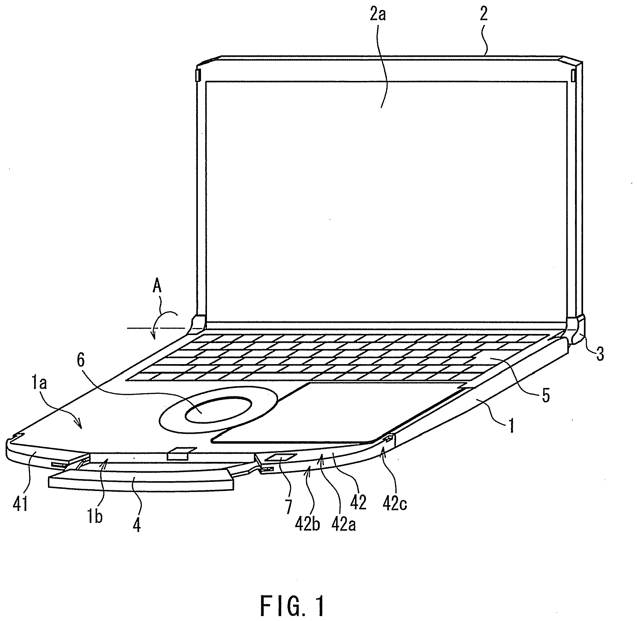

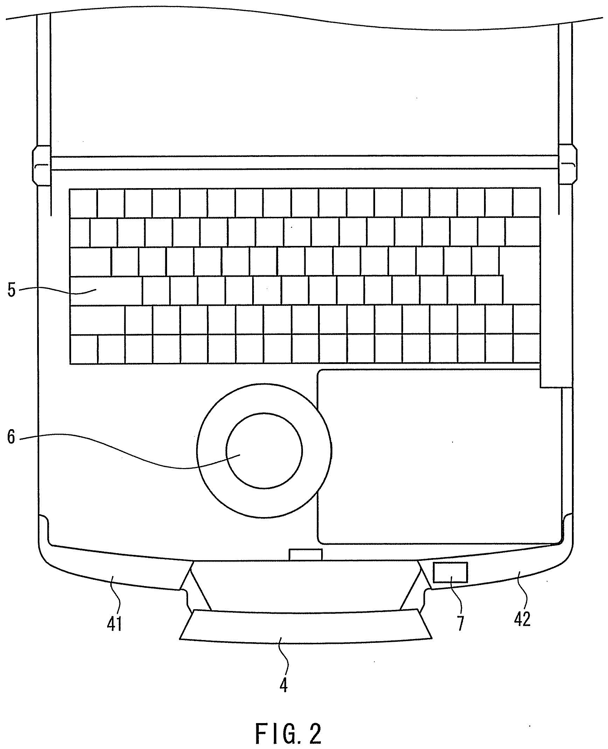

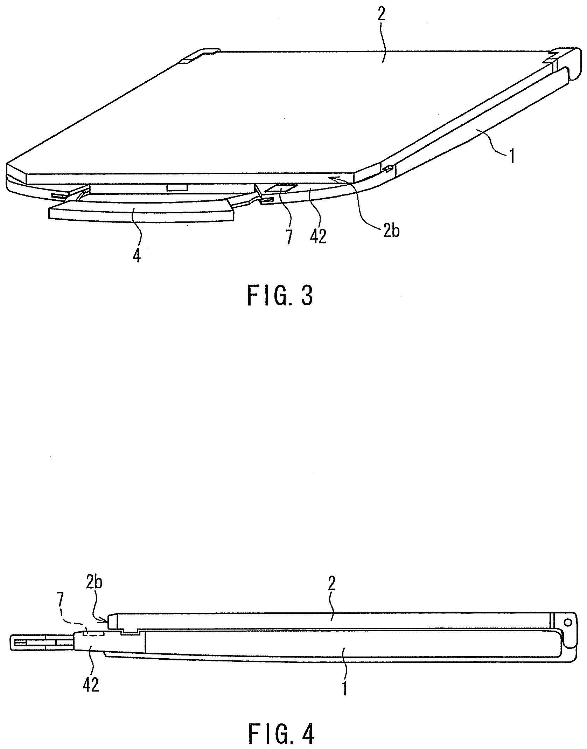

FIG. 1 is a perspective view showing an appearance of an information processing unit of Embodiment 1. FIG. 1 shows a first state of a laptop computer as an example of the information processing unit. FIG. 2 is a plan view showing a first case 1 of the information processing unit in Embodiment 1. FIG. 3 is a perspective view showing a second state of the laptop computer. FIG. 4 is a side view showing the laptop computer in the second state. The information processing unit in Embodiment 1 is not limited to the laptop computer but it can be selected from any portable information processing units such as a mobile phone terminal, an inventory management terminal, medical equipment or the like.

As shown in FIG. 1, the laptop computer has a first case and a second case. The first case 1 includes, for example, a hard disc drive and a circuit board on which various electric elements are mounted. The second case 2 has a liquid crystal display 2a. The first case 1 and the second case 2 are supported rotatably to each other by a hinge part 3. By rotating the second case 2 from the position (first state) as shown in FIG. 1 in a direction indicated with an arrow A, the second case 2 can shift to a position (second state) as shown in FIG. 3. When the surface of the first case 1 opposing the second case in the second state is defined as "upper surface", the first case 1 has a keyboard 5 and a pointing device 6 on the upper surface. The keyboard 5 is capable of an operation of inputting various characters. The pointing device 6 is capable of an operation of moving a cursor displayed on the liquid crystal display 2a to a desired position. When the area closer to the handle 4 is defined as "front", supporting members 41 and 42 for supporting the handle 4 are fixed to the side face 1b at the front of the first case 1.

The handle 4 can be gripped by the user with hand. The user can carry the laptop computer by hand by gripping the handle 4. The handle 4 is supported at the both ends in the longitudinal direction by the supporting members 41 and 42 respectively. The supporting members 41, 42 and the handle 4 protrude from the outer casing of the second case 2 as shown in FIG. 3 when the laptop computer is in the second state.

The fingerprint sensor 7 is disposed on the upper surface 42a of the supporting member 42. The fingerprint sensor 7 is capable of reading human fingerprints. A fingerprint read by the fingerprint sensor 7 is used for an authentication process. In a microcomputer included in the laptop computer, a program for performing the authentication process is stored. In a case of performing fingerprint authentication by using the fingerprint sensor 7, a fingerprint of a user authorized to use the laptop computer is read in advance with the fingerprint sensor 7, and the thus read fingerprint is registered as authentication information in the microcomputer. At the time of authentication, the fingerprint sensor 7 reads the fingerprint of the user who is going to use the laptop computer. Next, the microcomputer compares the authentication information (fingerprint) that has been registered and the fingerprint read by the fingerprint sensor 7. When the registered fingerprint and the read fingerprint match up with each other, the microcomputer establishes the authentication. On the other hand, when the registered fingerprint and the read fingerprint do not match up with each other, the microcomputer does not establish the authentication. Only when the authentication is established, the microcomputer controls the respective parts in the laptop computer so that the state will shift to allow an ordinary use.

The supporting members 41 and 42 can be formed integrally to the first case 1. By forming the supporting members 41 and 42 integrally to the first case 1, the number of components can be reduced. This is preferable since the number of steps in assembling an information processing unit can be reduced. Alternatively, the supporting members 41 and 42 can be formed as separate members independent from the first case 1. By forming the supporting members 41 and 42 as separate members independent from the first case 1, for instance, in a case where failure occurs in the fingerprint sensor 7, the supporting member including the fingerprint sensor 7 (the supporting member 42 in this embodiment) alone can be detached from the first case 1. This is preferable since part replacement of the fingerprint sensor 7 can be conducted in a simple manner.

The supporting member 41 can be provided as a pair of covers that are placed from above and below a protrusion (not shown) formed on the first case 1. The supporting member 42 can be provided as a pair of covers that are placed from above and below a protrusion (not shown) formed on the first case 1. It is preferable that the fingerprint sensor 7 is arranged on the upper cover of the pair of covers as the supporting member 42. Alternatively, the fingerprint sensor 7 can be arranged on the upper cover of the supporting member 41.

For operating the keyboard 5 of the laptop computer in an exemplary embodiment, the user first allows the laptop computer to be in the first state as shown in FIG. 1. Next, the user mounts both or one of his palms on the palm rest 1a disposed on the upper surface of the first case 1, and touches the keys of the keyboard 5 with his fingers. Alternatively, during an operation of the pointing device 6, the user mounts one of his palms on the palm rest 1a and touches to operate the pointing device 6 with the fingertip. In Embodiment 1, since the fingerprint sensor 7 is disposed on the upper surface 42a of the supporting member 42, the fingers and palms of the user are positioned at a distance from the fingerprint sensor 7 when the user operates the keyboard 5 and the pointing device 6, and thus the possibility that the fingers and the hands come into accidental contact with the fingerprint sensor 7 is reduced.

When the laptop computer shifts to the second state as shown in FIG. 3, the fingerprint sensor 7, which is disposed on the supporting member 42 protruding from the first case 1, is exposed. However, since a side face 2b of the second case 2 is positioned in the vicinity of the fingerprint sensor 7 as shown in FIG. 4, other members rarely contact the fingerprint sensor 7, and thus the fingerprint sensor 7 can be protected. For example, even if the user carelessly bumps the part of the laptop computer near the fingerprint sensor 7 against a wall or the like while carrying the laptop computer by gripping the handle 4, the second case 2 or the front face 42b and the side face 42c of the supporting member 42 come into contact first with the wall or the like. Therefore, it is possible to prevent direct damage to the fingerprint sensor 7.

According to this exemplary embodiment, since the distance from the fingerprint sensor 7 to the keyboard 5 and the pointing device 6 can be increased by disposing the fingerprint sensor 7 on the supporting member 42, the possibility that the fingers or the hands come into accidental contact with the fingerprint sensor 7 can be reduced. Thereby it is possible to reduce the possibility of the operation errors of the fingerprint sensor 7.

Moreover, since the possibility that the fingers and the hands come into accidental contact with the fingerprint sensor 7 can be reduced, adherence of fingerprint stains or the like to the fingerprint sensor 7 can be reduced. As a result, sensitivity degradation of the fingerprint sensor 7, which is caused by adherence of fingerprint stains or the like, can be decreased.

Moreover, since the possibility that the fingers and the hands come into accidental contact with the fingerprint sensor can be reduced, discomfort for the hands of the user can be prevented during the user's operation of the keyboard 5 and the pointing device 6.

Furthermore, since the fingerprint sensor 7 is disposed on a supporting member 42 separated from the first case 1, in a case where failure occurs on the fingerprint sensor 7, the supporting member 42 can be detached from the first case 1 for the purpose of repairs and part replacement of the fingerprint sensor 7. Therefore, the ease of repairs and part replacement can be improved.

Further, since the fingerprint sensor 7 is disposed on a supporting member 42 separated from the first case 1, in a case of volume production of a model equipped with the fingerprint sensor 7 and a model without such a fingerprint sensor, only the specifications for the supporting member 42 should be modified, and thus the production cost can be suppressed. In a configuration according to the conventional technique where a fingerprint sensor is mounted in a first case, in a case of volume production of both the model equipped with the fingerprint sensor 7 and the model without such a fingerprint sensor, it is required to modify the specifications for the first case, which

The fingerprint sensor 7 can be disposed on not the supporting member 42 but the supporting member 41.

The fingerprint sensor 7 can be disposed not on the upper surface 42a of the supporting member 42 but on the front face 42b or the side face 42c of the supporting member 42. Since the distance from the fingerprint sensor 7 to the keyboard 5 and the pointing device 6 can be increased further by disposing the fingerprint sensor 7 on the front face 42b or the side face 42c of the supporting member 42, the occurrence of problems such as malfunction of the fingerprint sensor 7 can be reduced further. This exemplary embodiment is not limited to the system of fingerprint authentication using the fingerprint sensor 7, but other types of biometric authentication can be employed. Examples of the other biometric authentication include vein authentication performed by reading veins of a finger or the like with a vein sensor, and an iris authentication performed by reading an iris in a pupil with an iris sensor. In this exemplary embodiment, the supporting members 41 and 42 are provided as separate members with respect to the first case 1, and fixed to the side face 1b of the first case 1, Alternatively, the supporting members 41 and 42 can be formed as supporting parts integrally to the first case 1. Even in this configuration, since the distance from the fingerprint sensor 7 to the keyboard 5 and the pointing device 6 can be increased as in Embodiment 1, the possibility that the finger or the hand comes into accidental contact with the fingerprint sensor 7 can be reduced, As a result, malfunction of the fingerprint sensor 7 can be decreased. Moreover, adherence of stains like fingerprints on the fingerprint sensor 7 can be reduced. Further, it is usefulin preventing discomfort for the user's hand when the user's operation of the keyboard 5 and the pointing device 6.

The keyboard 5 and the pointing device 6 in Embodiment 1 are examples of operation parts according to the present invention. The liquid crystal display 2a in Embodiment 1 is an example of a display part according to the present invention. The fingerprint sensor 7 in Embodiment 1 is an example of a biometric authentication part according to the present invention. The handle 4 in this exemplary embodiment, is an example of a grip part according to the present invention. The supporting members 41 and 42 are examples of the supporting part according to the present invention. The upper cover of the pair of covers of the supporting member 41 is an example of the supporting part according to the present invention. The upper cover of the pair of covers of the supporting member 42 is an example of the supporting part according to the present invention. And the first case 1 in this exemplary embodiment is an example of the case according to the present invention.

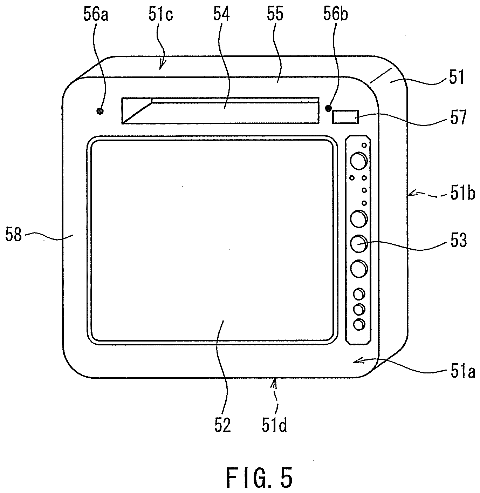

FIG. 5 is a perspective view showing an appearance of a mobile PC as one example of the information processing unit according to another exemplary embodiment. The mobile PC as shown in FIG. 5 has storage media such as a central processing unit (CPU) and a hard disc drive (HDD), which are included in a substantially rectangular case 51. The mobile PC as shown in FIG. 5 is just an example. Any portable information processing units such as a portable phone terminal, an inventory management terminal, portable medical equipment and a portable present position indicator (car navigation equipment or the like) can be employed.

The case 51 includes a main body 58, a grip part 55, and supporting parts 56a, 56b. The main body 51 includes CPU, HDD and the like. A liquid crystal display 52 and an operation part 53 are disposed on a front face 51a of the case 51. The front face 51a denotes a surface on which the liquid crystal display 52 and the like are disposed, and which opposes the user in an ordinary use condition.

A user can grip the mobile PC by passing one hand (normally the left hand) through a grip belt (not shown) disposed on a back face 51b opposing the front face 51a of the case 51, and operates the touch panel and the operation part 53 of the liquid crystal display 52 with the other hand (normally the right hand). This is the ordinary use condition of the mobile PC for the user. The grip belt is not an essential component.

The operation part 53 includes, for example, a power button and buttons for executing various functions. The liquid crystal display 52 is a touch-panel type display. The liquid crystal display 52 can be used for a character input operation, shifting a cursor displayed on the liquid crystal display 52 for example by touching the display surface with a stylus pen or the like. Further, the liquid crystal display 52 can display information based on the operation of the operation part 53.

On the case 51 (the upper surface 51 side), a grip part 55 that can be gripped by the user is disposed. An opening is formed between the grip part 55 and the main body 58. The user sticks his finger into the opening 54 so as to grip the grip part 55 firmly, and thus the user can carry the mobile PC with his hand. The grip part 55 is connected integrally to the supporting parts 56a and 56b at both longitudinal ends. The supporting parts 56a and 56b are connected integrally to the main body 58. The grip part 55 is not limited to the configuration to be connected integrally to the supporting parts 56a and 56b, but it can be provided as a separate member. The supporting parts 56a, 56b are not limited to the configuration to be connected integrally to the main body 58, but they can be provided as separate members.

On the front face of the supporting part 56b (the surface in the same plane as the front face 51a of the case 51), a fingerprint sensor 57 is disposed. The fingerprint sensor 57 is capable of reading human fingerprints. The fingerprint read by the fingerprint sensor 57 is used for an authentication process. A program for performing such an authentication process is stored in a microcomputer included in the mobile PC. In a case of performing fingerprint authentication by using the fingerprint sensor 57, a fingerprint of a user authorized to use the mobile PC is read in advance with the fingerprint sensor 57, and the thus read fingerprint is registered as an authentication fingerprint in the microcomputer. At the time of authentication, the fingerprint sensor 57 reads the fingerprint of the user who is going to use the mobile PC. Next, the microcomputer compares the previously registered authentication information (fingerprint) and the fingerprint read by the fingerprint sensor 57. When the registered fingerprint and the read fingerprint match up with each other, the microcomputer establishes the authentication. When the registered fingerprint and the read fingerprint do not match up with each other, the microcomputer does not establish the authentication. Only when the authentication is established, the microcomputer controls the respective parts in the mobile PC so that the state will shift to allow an ordinary use.

During an operation of the mobile PC as shown in FIG. 5, as described above, the user grips the case 51 by passing one hand (ordinarily, the left hand) through the grip belt (not shown) arranged on the back face 51b, and touches to operate the touch panel on the liquid crystal display 52 by holding a stylus pen with the other hand (ordinarily the right hand), or operates the operation part 53 with his fingers. The user can operate while observing visually an image on the liquid crystal display 52.

In the above-mentioned use condition, the front face 51a of the case 51 opposes the user's face since the user grips the mobile PC at a posture to observe easily the liquid crystal display 52. Therefore, the bottom face 51d of the case 51 is positioned the closest to the body of the user. The upper surface 51c opposing the bottom face 51d is at a position most separated from the body of the user. The grip part 55 and the supporting parts 56a and 56b are positioned apart from the user. Therefore, when viewed from the user side, the fingerprint sensor 57 is at a position more separated in comparison with the liquid crystal display 52 and the operation part 53, and thus the possibility that the hand or the like of the user come into accidental contact with the fingerprint sensor 57 is decreased during the user's operation of the fingerprint sensor 57.

Since the fingerprint sensor 57 is disposed on the supporting member 56b in Embodiment 2, there is less possibility that the finger or the hand comes into accidental contact with the fingerprint sensor 57 during the user's operation of the touch panel of the liquid crystal display 52 and/or the operation part 53. Therefore, it is possible to lower the risk of malfunction of the fingerprint sensor 57.

Moreover, since the possibility that the finger or the hand come into accidental contact with the fingerprint sensor 57 can be lowered, the adherence of fingerprint stains or the like on the fingerprint sensor 57 can be reduced. Thus, the sensitivity degradation of the fingerprint sensor 57, which is caused by the adherence of fingerprint stains or the like, can be suppressed.

Moreover, since the possibility that the finger or the hand comes into accidental contact with the fingerprint sensor 57 can be lowered, the user would not feel discomfort at the hand during an operation of the keyboard 55 and the pointing device 56.

The fingerprint sensor 57 can be disposed not on the supporting part 56b but on the supporting part 56a. This exemplary embodiment is not limited to the system of fingerprint authentication using the fingerprint sensor 57, but other types of biometric authentication can be employed. Examples of the other biometric authentication include vein authentication performed by reading veins of a finger or the like with a vein sensor, and an iris authentication performed by reading an iris in a pupil with an iris sensor.

The grip part 55 and the supporting parts 56a, 56b can be provided respectively as separate members instead of connecting them integrally to the main body 58. According to the configuration, when a failure occurs on the fingerprint sensor 57 disposed on the supporting part 56b, it is possible to detach the supporting part 56b from the main body 58 for the purpose of repairing and part replacement of the fingerprint sensor 57, and thus the workability in repairs and part replacement can be improved. Furthermore, in a case of volume production of a model equipped with the fingerprint sensor 57 and a model without such a fingerprint sensor, only the specification of the supporting part 56b should be modified. As a result, the production cost can be decreased.

The operation part 53 in Embodiment 2 is an example of an operation part according to the present invention. The liquid crystal display 52 in Embodiment 2 is an example of a display part according to the present invention. The fingerprint sensor 57 in Embodiment 2 is an example of a biometric authentication part according to the present invention. The grip part 55 in Embodiment 2 is an example of a grip part according to the present invention. The supporting parts 56a and 56b are examples of supporting part according to the present invention. And the case 51 or the main body 58 in this exemplary embodiment is an example of the case according to the present invention.

The information processing unit of the present invention is applied usefully to an instrument having a fingerprint authentication means.

## Claims

1. An information processing unit comprising:
a case (1, 2);
an operation part (5) that is capable of various input operations;
a display part (2a) that displays an image based on an input by the operation part (5);
a biometric authentication part (7) that is capable of reading characteristics of a human body; and
a grip part comprising a handle supporting part (41, 42) and handle (4) that can be gripped by a user with a hand,
wherein the case (1, 2) comprises a first case (1) on which the operation part (5) is disposed and a second case (2) on which the display part (2a) is disposed;
the first case (1) and the second case (2) are pivoted to open and close by rotation about a shaft (3);
**characterized in that**:
the handle supporting part (41, 42) is fixed to the side face (1b) at the front of the first case (1), opposite to the back side of the first case (1) connected to the second case (2) through shaft (3);
wherein the case (1, 2) and the supporting part (41, 42) on which the biometric authentication part (7) is disposed, are separate members detachable from each other, and
the grip part comprising the handle (4) and the supporting part (41, 42) with the biometric authentication part (7), protrudes from the case (1, 2) when the first case (1) and the second case (2) are in a closed position.

2. The information processing unit according to claim 1,
wherein the biometric authentication part (7) is a fingerprint sensor capable of reading a fingerprint of a human body.

## Patentansprüche

1. Informationsverarbeitungseinheit, die aufweist:
ein Gehäuse (1, 2);
einen Bedienteil (5), der für verschiedene Eingabebedienungen geeignet ist;
einen Anzeigeteil (2a), der ein Bild basierend auf einer Eingabe durch den Bedienteil (5) anzeigt;
einen Biometrieauthentifizierungsteil (7), der geeignet ist, Charakteristiken eines menschlichen Körpers zu lesen; und
einen Greifteil umfassend einen Griffträgerteil (41, 42) und Griff (4), der durch einen Nutzer mit einer Hand gegriffen werden kann,
wobei das Gehäuse (1, 2) ein erstes Gehäuses (1), auf welchem der Bedienteil (5) angeordnet ist, und ein zweites Gehäuses (2), auf welchem der Anzeigeteil (2a) angeordnet ist, aufweist;
wobei das erste Gehäuse (1) und das zweite Gehäuse (2) durch Drehung um eine Achse (3) zum Öffnen und Schließen schwenkbar sind;
**dadurch gekennzeichnet, dass**:
der Griffträgerteil (41, 42) an der Seitenfläche (1b) an der Front des ersten Gehäuses (1) gegenüber der Hinterseite des ersten Gehäuses (1), die mit dem zweiten Gehäuse (1) durch die Achse (3) verbunden ist, fixiert ist;
wobei das Gehäuse (1, 2) und der Trägerteil (41, 42), auf welchem der Biometrieauthentifizierungsteil (7) angeordnet ist, voneinander trennbare separate Elemente sind und
wobei der Greifteil umfassend den Griff (4) und den Trägerteil (41, 42) mit dem Biometrieauthentifizierungsteil (7) von dem Gehäuse (1, 2) hervorsteht, wenn sich das erste Gehäuse (1) und das zweite Gehäuse (2) in einer geschlossenen Position befinden.

2. Informationsverarbeitungseinheit nach Anspruch 1,
wobei der Biometrieauthentifizierungsteil (7) ein Fingerabdrucksensor ist, der geeignet ist, einen Fingerabdruck eines menschlichen Körpers zu lesen.

## Revendications

1. Unité de traitement d'informations comprenant:
un boîtier (1, 2);
une partie de commande (5) qui se prête à diverses opérations d'entrée;
une partie d'affichage (2a) qui affiche une image sur la base d'une entrée par ladite partie de commande (5);
une partie d'authentification biométrique (7) qui est apte à lire des caractéristiques d'un corps humain; et
une partie de préhension comprenant une partie de support de poignée (41, 42) et une poignée (4) qui peut être saisie d'une main par un utilisateur,
dans laquelle le boîtier (1, 2) comprend un premier boîtier (1) sur lequel est disposée la partie de commande (5) et un deuxième boîtier (2) sur lequel est disposée la partie d'affichage (2a);
dans laquelle, pour ouvrir et fermer, le premier boîtier (1) et le deuxième boîtier (2) peuvent pivoter par rotation autour d'un axe (3);
**caractérisée par le fait que**:
la partie de support de poignée (41, 42) est fixée sur la face latérale (1b) sur le front du premier boîtier (1), opposée à la face arrière du premier boîtier (1) reliée par l'axe (3) au deuxième boîtier (2);
dans laquelle le boîtier (1, 2) et la partie de support (41, 42) sur laquelle est disposée la partie d'authentification biométrique (7) sont des éléments séparés détachables l'un de l'autre, et
dans laquelle la partie de préhension comprenant la poignée (4) et la partie de support (41, 42) avec la partie d'authentification biométrique (7) fait saillie du boîtier (1, 2) lorsque le premier boîtier (1) et le deuxième boîtier (2) se trouvent dans une position fermée.

2. Unité de traitement d'informations selon la revendication 1,
dans laquelle la partie d'authentification biométrique (7) est un capteur d'empreinte digitale apte à lire une empreinte digitale d'un corps humain.
